# EUROPÄISCHE PATENTSCHRIFT

(11) **EP 3 003 675 B1**
(45) Veröffentlichungstag und Bekanntmachung des Hinweises auf die Patenterteilung: **08.04.2020**
(21) Anmeldenummer: 14730071.9
(22) Anmeldetag: 20.05.2014
(51) Int. Cl.: B29C 45/00, B29L 31/00, B29C 45/14

(54) **VERFAHREN ZUR HERSTELLEN EINES VERBINDUNGSTEILS MITTELS SCHAUMSPRITZGIESSEN**
PROCESS FOR MANUFACTURING A CONNECTION ELEMENT BY FOAM INJECTION
PROCÉDÉ DE FABRICATION D'UN CONNECTEUR PAR INJECTION MOULAGE D' UNE MOUSSE DE MATIÈRE PLASTIQUE

(30) Priorität: 28.05.2013 DE 102013009091
(43) Veröffentlichungstag der Anmeldung: 13.04.2016
(73) Patentinhaber: Gottlieb Binder GmbH & Co. KG, 71084 Holzgerlingen (DE)
(72) Erfinder: POULAKIS, Konstantinos, Dr., 71157 Hildrizhausen (DE)
(74) Vertreter: Bartels und Partner, Patentanwälte
(86) Internationale Anmeldenummer: PCT/EP2014/001357
(87) Internationale Veröffentlichungsnummer: WO 2014/191089

(56) Entgegenhaltungen:
- EP-A1- 0 465 983
- EP-A1- 1 481 603
- EP-A2- 0 246 221
- EP-A2- 1 116 450
- WO-A1-98/20766
- WO-A1-2012/025980
- DE-A1-102004 015 321
- DE-A1-102011 104 886
- JP-A- H05 211 910
- JP-U- 3 181 929
- US-A- 4 842 916
- US-A- 5 540 970
- US-B2- 8 118 363

## Beschreibung

Die Erfindung betrifft ein Verfahren zum Herstellen eines Verbindungsteils mit den Schritten im Oberbegriff von Anspruch 1. Speziell bezieht sich die Erfindung auf die Herstellung eines Verbindungsteils, das an einer Seite ein eine Komponente eines Haftverschlusses bildendes Verschlussteil mit Haft- und/oder Verhakungselementen aufweist. Das Verbindungsteil kann Teil eines Befestigungssystems sein, bei dem zur Bildung einer Haftverschlussverbindung mit einem festzulegenden Bauteil an diesem Anbringteile vorgesehen sind, die Haft- und/oder Verhakungselemente aufweisen, die mit den korrespondierenden Haft- und/oder Verhakungselementen des jeweiligen Verbindungsteils in wieder lösbaren Eingriff bringbar sind.

Für ein wieder lösbares Befestigen von Gegenständen oder Bauteilen kommen Haftverschlussverbindungen auf vielen Gebieten zum Einsatz. Häufig werden bei Kraftfahrzeugen Bodenmatten am Fahrzeugboden gegen Verrutschen oder Abheben in der Weise gesichert, dass am Fahrzeugboden verankerte Verbindungsteile, die Haft- und/oder Verhakungselemente aufweisen, mit Anbringteilen, die an der Bodenmatte befestigt sind und korrespondierende Haft- und/oder Verhakungselemente aufweisen, in Haftkontakt oder Verhakungseingriff kommen. Diesbezüglich ist es Stand der Technik, die Verbindungsteile mit einem am Fahrzeugboden verankerbaren, tellerartigen Trägerteil auszubilden und an dessen Oberseite ein die Haft- und/oder Verhakungselemente aufweisendes Verschlussteil anzubringen. Dies geschieht mittels chemischer oder thermischer Klebeverbindungen, beispielsweise mit lösungsmittelhaltigen Klebstoffen oder Heißkleber. Abgesehen von der Umweltbelastung durch lösungsmittelhaltige Substanzen sind weder die chemischen noch die thermischen Klebeverbindungen zufriedenstellend. Wie sich gezeigt hat, besteht bei einem Einsatz bei Kraftfahrzeugbodenmatten die Gefahr, dass sich das Verschlussteil und das Trägerteil voneinander lösen, wenn die Temperatur und/oder die relative Luftfeuchtigkeit im Fahrzeug zu hoch sind. Eine Gefahr der Ablösung besteht auch, wenn die Bodenmatte länger im Gebrauch war. Dies bildet ein Sicherheitsrisiko, insbesondere wenn die Bodenmatte während einer Fahrt auf der Fahrerseite nach vorn in Richtung auf die Pedale verrutscht, was zu einer Verunsicherung des Fahrers und gegebenenfalls zu einem Unfallgeschehen führen kann.

Um die Gefahr des Ablösens des Verschlussteils vom Trägerteil zu vermeiden, ist es gemäß einer in DE 10 2009 054 896 A1 offenbarten Lösung auch Stand der Technik, das Verbindungsteil derart herzustellen, dass in einem einzigen Prozessschritt in einer Spritzgießform gleichzeitig das Trägerteil und Haken als Verschlusselemente geformt werden. Zwar ist bei diesem Vorgehen praktisch keine Gefahr des Ablösens gegeben, jedoch ist die Anzahl der Haken, die sich in der das Trägerteil bildenden Spritzgießform ausbilden lassen, äußerst begrenzt, beispielsweise auf eine Anzahl von höchstens 50 Haken pro cm². Eine derart geringe, erreichbare Packungsdichte der Verhakungselemente ist nicht zufriedenstellend.

Um bei einem Verbindungsteil den Vorteil der einstückigen Ausbildung von Trägerteil und Verschlussteil beizubehalten und gleichzeitig den Nachteil einer unzulänglichen Ausbildung des Verschlussteils zu vermeiden, ist es gemäß einer in der Patentanmeldung DE 10 2013 009 091 A1 aufgezeigten Lehre vorgesehen, das Verschlussteil mit seinen Haft- und/oder Verhakungselementen in einem ersten Schritt herzustellen und als Einlegeteil in eine Spritzgießform einzubringen, in der in einem zweiten Schritt mittels eines Hinterspritzvorgangs das Verbindungsteil in Form eines Bauteils gebildet wird, das das Verschlussteil als einen einstückigen Bestandteil enthält. Dadurch ist ein Verbindungsteil herstellbar, bei dem wegen der Einstückigkeit von Trägerteil und Verschlussteil keine Ablösegefahr besteht und bei dem, weil das Verschlussteil in einem gesonderten Herstellprozess als Einlegeteil vorfertigbar ist, die Haft- und/oder Verhakungselemente in unterschiedlicher Art ausgebildet werden können, so dass außer Haken auch Schlaufen oder pilzartige Elemente mit runden oder flachen Köpfen vorgesehen sein können, wie sie sich mit sehr hohen Packungsdichten mit hierfür vorgesehenen, speziellen Verfahren herstellen lassen. Bei der Durchführung dieses Verfahrens muss beim Hinterspritzvorgang, bei dem eine Schmelze aus einem thermoplastischen Kunststoff, wie Polyamid oder Polypropylen, vorzugsweise mit Glasfaserverstärkung, in die Spritzgießform eingespritzt wird, darauf geachtet werden, dass keine Beeinträchtigung der Elemente des Verschlussteils durch übermäßigen Formdruck, etwa durch Flachdrücken der Haft- oder Verhakungselemente, eintritt. Um diese Gefahr auszuschließen, ist ein entsprechend aufwändiger Aufbau des Spritzgießwerkzeugs erforderlich, beispielsweise um längere Fließwege und dadurch bedingte höhere Einspritzdrücke zu vermeiden.

Die US 4 842 916 A beschreibt ein Verfahren zum Herstellen eines Verbindungsteils, wobei in einem ersten Schritt ein eine Komponente eines Haftverschlusses bildendes Verschlussteil mit Haft- und/oder Verhakungselementen hergestellt und als Einlegeteil in eine Gießform eingebracht wird, in der in einem zweiten Schritt mittels eines Kunststoffmaterials ein Trägerteil gebildet wird, das sich mit dem Einlegeteil unter Bildung des Verbindungsteils verbindet.

Verbindungsteile gehen darüber hinaus auch aus der WO 98/20766 A1, der DE 10 2004 015 321 A1, der US 5 540 970, der DE 20 2011 104 886 A1, der EP 1 481 603 A1, der EP 0 465 983 A1, der EP 0 246 221 A2, der EP 1 116 450 A2, der EP 2 609 826 A1, der JP H05-211910, der JP 3181929 U und der US 8 118 363 B2 hervor.

Im Hinblick auf diese Problematik stellt sich die Erfindung die Aufgabe, ein Verfahren anzugeben, mit dem sich Verbindungsteile, bei denen das Trägerteil das Verschlussteil als einen einstückigen Bestandteil enthält, mit geringem Vorrichtungsaufwand rationell und sicher herstellen lassen.

Erfindungsgemäß ist diese Aufgabe durch ein Verfahren gelöst, das die Schritte des Patentanspruchs 1 in seiner Gesamtheit aufweist.

Gemäß dem Kennzeichen von Anspruch 1 ist vorgesehen, dass die Spritzgießform bewegliche Formteile aufweist, die eine Formkavität begrenzen, dass in dem Formteil, das dem einen Kanal aufweisenden Formteil gegenüberliegt und in dem eine die Kavität bildende Vertiefung ausgebildet ist, in die Kavität führende Luftkanäle ausgebildet sind, und dass über die Luftkanäle Saugluft angelegt wird oder beim Gießvorgang Stützgas unter Druck für den Schutz der Verhakungselemente zugeführt wird.

Weiter besteht eine wesentliche Besonderheit darin, dass beim zweiten Herstellschritt, bei dem durch Hinterspritzen des in die Spritzgussform eingebrachten Einlegeteils das Trägerteil ausgebildet wird, der Hinterspritzvorgang mittels Schaum-Spritzgießens durchgeführt wird. Bei diesem in der Fachwelt als Thermoplast-Schaum-Spritzgießen (TSG) bekannten Spritzgießprozess wird die Polymerschmelze mit einem Treibmittel beladen, welches nach dem Einspritzvorgang im Formhohlraum zum Aufschäumen der Formmasse führt. Im Vergleich zum Kompaktspritzgießen lassen sich beim Schaum-Spritzgießen bei geringeren Prozesstemperaturen längere Fließwege realisieren, was einen vereinfachten konstruktiven Aufbau des Werkzeugs ermöglicht. Bei entsprechend geringeren Einspritzdrücken ergeben sich geringere Schließkräfte für das Formwerkzeug. Zudem ist die Gefahr der Beeinträchtigung der Haft- und/oder Verhakungselemente durch wirkende Druckkräfte verringert.

Beim Hinterspritzen mittels Schaum-Spritzgießen lässt sich das geschäumte Trägerteil als Dämpfungsschicht konzipieren, die höhere Spritzgussdrücke ermöglicht, ohne dass es zu Beschädigungen an den Haft- und/oder Verhakungselementen des Einlegeteils kommt.

Das Schaum-Spritzgießen lässt sich mittels chemischer, dem Basispolymer zugemischter Treibmittel oder mittels physikalischer Treibmittel durchführen, wobei die Polymerschmelze mit einem Treibgas beladen wird. Da bei chemischen Treibmitteln nach Abspalten von Treibgasen feste Zersetzungsrückstände in der Polymerschmelze verbleiben, wird das erfindungsgemäße Verfahren vorteilhafterweise derart durchgeführt, dass für das Schaum-Spritzgießverfahren mindestens ein Treibmittel auf physikalische Weise dem Kunststoffmaterial zugemischt wird, vorzugsweise wird Kohlendioxydgas (CO₂) oder Stickstoffgas (N₂) als Treibmittel einer Polymerschmelze zugemischt, die vorzugsweise aus Polyamid (PA), Polypropylen (PP), Polyethylen (PE) oder Acrylnitrilbutadienstyrol (ABS) besteht.

Mit besonderem Vorteil wird das erfindungsgemäße Verfahren derart durchgeführt, dass zwischen dem Einlegeteil, auch als Bestandteil desselben, und dem geschäumten Trägerteil eine Beschichtung eingesetzt wird, vorzugsweise das Einlegeteil auf seiner dem Trägerteil zugewandten Seite mit einem Reaktionsvermittler versehen wird, der besonders bevorzugt Polyurethan aufweist. Ein solches Additiv begünstigt die Bildung einer stoffschlüssigen Verbindung des geschäumten Trägerteils mit dem Einlegeteil beim Hinterspritzen. Als Reaktionsvermittler oder Klebstoff zum Herstellen der Verbindung kann auch ein lösungsmittelfreier, feuchtigkeitsvernetzender Schmelzklebstoff auf Basis von reaktiven Polyurethanprepolymeren dienen, enthaltend mindestens ein Polyesterpolyol in einer Konzentration zwischen 10 % und 90 %, gegebenenfalls Polyetherpolyol in einer Konzentration von 0 % bis 50 % sowie mindestens Polydisocyanat in einer Gewichtskonzentration zwischen 5 % und 35 %.

Das derart hergestellte Verbindungsteil kann eine Art Halbzeug bilden, das vorzugsweise im Rahmen weiterer Spritzgussverfahren unter Bildung eines End-Bauteils mit weiteren Kunststoffmaterialien verbunden wird, die eine gute Verbindung mit dem geschäumten Trägerteil des Verbindungsteils eingehen.

Für eine besonders rationelle Fertigung von End-Bauteilen unter Verwendung der nach dem erfindungsgemäßen Verfahren hergestellten Verbindungsteile kann mit Vorteil so vorgegangen werden, dass das jeweilige Verbindungsteil für seine weitere Weiterverarbeitung von mehreren Verbindungsteilen abgetrennt wird, die in der Art eines Coils zusammenhängend hergestellt sind.

Mit besonderem Vorteil wird die Anordnung so getroffen, dass das jeweilige Trägerteil mit einem vorgebbaren Überstand unter Bildung einer Abdichtung das Einlegeteil seitlich übergreift und dadurch eine Art Barriere bildet, die die Haft- und/oder Verhakungselemente des jeweiligen, beispielsweise tellerförmig ausgebildeten Verbindungsteils gegen ein Zusetzen durch seitlich eindringende Schmutz- oder Staubpartikel schützt.

Die jeweiligen Haft- und/oder Verhakungselemente des Einlegeteils können in der in der Haftverschlusstechnik an sich bekannten Weise auf unterschiedliche Art ausgebildet sein, beispielsweise gegossen, gewebt, gewirkt, gestrickt oder geraschelt werden, wobei die Elemente haken-, pilz- oder schlaufenförmig ausgebildet werden können. Als "männliche" Verhakungselemente kommen beispielsweise als Mikroplast® bezeichnete gegossene Elemente mit Pilzen aus Polyamid oder Polypropylen in Frage. Als gewebte, textile Elemente mit Haken können als Klettostar® bezeichnete Elemente aus Polyamid oder Polypropylen und als gewebte textile Elemente mit Pilzen können als Pressotex® bekannte Elemente, ebenfalls aus Polyamid oder Polypropylen, vorgesehen sein, wobei die textilen Elemente auch mit einem Flammschutz versehen sein können. "Weibliche" Verhakungselemente können als Flausch-, Schlingenware oder Velours gewebt, gewirkt, gestrickt oder geraschelt werden, beispielsweise als Klettostar®-Flausch mit Schlaufen als Verhakungselementen. Ebenso lassen sich anstelle von Verhakungselementen durch Adhäsion wirkende Haftelemente vorsehen, sog. "Gecko-Elemente", bei denen pilzartige Haftelemente planare Kopfoberflächen aufweisen, die zusammen mit planaren Gegenflächen mittels Van-der-Waals-Kräften eine Adhäsionsverbindung bilden. Derartige Pilzelemente mit gegenüber den Stängeln verbreiterten Köpfen lassen sich durch Formverfahren, wie in DE 198 28 856 C1 beschrieben, herstellen, wobei unter anderem Kunststoffe, wie Polyamid 6, Polyamid 6.6, Polyamid 12, vorteilhaft einsetzbar sind. Für Verhakung vorgesehene Elemente, wie Pilze ohne planare Kopfflächen oder Haken, lassen sich nach einem im Stand der Technik bekannten Verfahren, wie es unter anderem beispielsweise aus DE 10 2008 007 913 A1 entnehmbar ist, an einem Kunststoffgewebe oder Kunststoffgewirke herstellen, das vorstehende Filamente, beispielsweise in Form von Polfäden eines Gewebes, aufweist. Durch das Auftrennen von Schlaufen dieser Gewebe oder Gewirke lassen sich Haken als Verhakungselemente bilden. Um Pilzköpfe zu erhalten, können die an ihren oberen Bögen jeweils aufgetrennten Polfäden derart erwärmt werden, dass sie sich zu Pilzköpfen verformen.

Nachstehend ist die Erfindung anhand der beigefügten Zeichnung im Einzelnen erläutert. Es zeigen:
- Fig. 1: eine stark schematisch vereinfachte Schnittansicht eines Spritzgießwerkzeugs zur Durchführung eines Schaum-Spritzgießverfahrens für die Herstellung eines Verbindungsteils gemäß dem erfindungsgemäßen Verfahren;
- Fig. 2: eine Draufsicht eines Ausführungsbeispiels eines nach dem erfindungsgemäßen Verfahren hergestellten Verbindungsteils, wobei Haft- und/oder Verhakungselemente schematisch vereinfacht angedeutet sind;
- Fig. 3: eine Seitenansicht des Ausführungsbeispiels des Verbindungsteils;
- Fig. 4: eine Schnittansicht des Verbindungsteils entsprechend der Schnittlinie IV-IV von Fig. 2;
- Fig. 5: einen vergrößert gezeichneten Teilschnitt des in Fig. 4 mit V bezeichneten Bezirks;
- Fig. 6 und 7: perspektivische Schrägansichten des Verbindungsteils, gesehen auf die Rückseite bzw. die Vorderseite;
- Fig. 8: eine Draufsicht eines End-Bauteils, versehen mit dem Ausführungsbeispiel des nach dem erfindungsgemäßen Verfahren hergestellten Verbindungsteils;
- Fig. 9: eine Seitenansicht des End-Bauteils von Fig. 8;
- Fig. 10: eine Schnittdarstellung des End-Bauteils entsprechend der Schnittlinie X-X von Fig. 8;
- Fig. 11: einen vergrößert gezeichneten Teilschnitt des in Fig. 10 mit XI bezeichneten Bezirks; und
- Fig. 12 und 13: schematisch vereinfachte Draufsichten von als Coil zusammenhängend ausgebildeten Verbindungsteilen unterschiedlicher Umrissform.

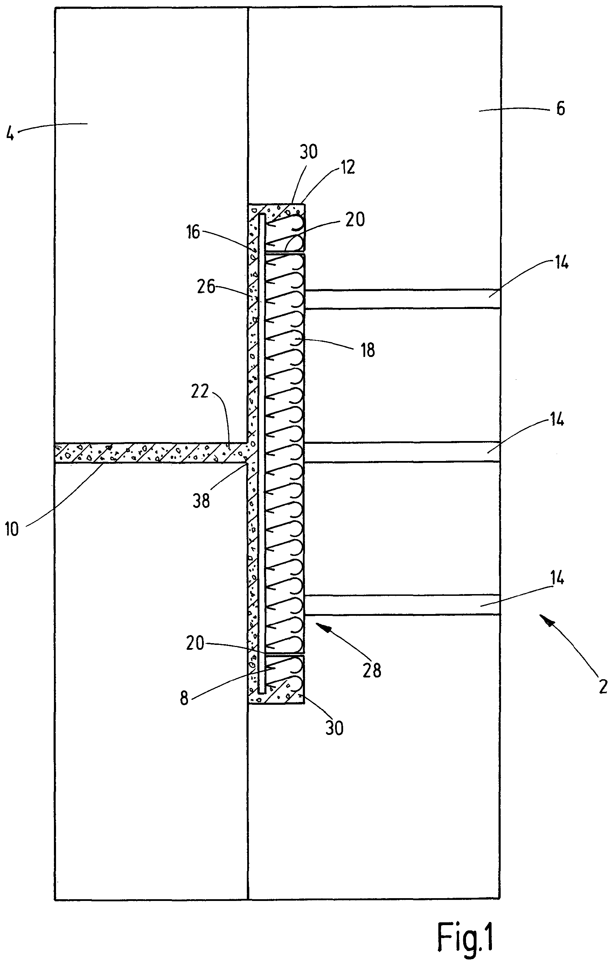

Die Fig. 1 zeigt stark schematisch vereinfacht, in der Art einer Prinzipdarstellung, eine Spritzgießform 2, deren bewegliche Formteile 4 und 6, die eine Formkavität 8 begrenzen, in geschlossener Stellung dargestellt sind. Von mehreren, im Formteil 4 befindlichen Heißkanälen für die Zufuhr des Gießmaterials ist in Fig. 1 lediglich ein Kanal sichtbar und mit 10 bezeichnet. In dem Formteil 6, das dem den Kanal 10 aufweisenden Formteil 4 gegenüberliegt und in dem eine die Kavität 8 bildende Vertiefung 12 ausgebildet ist, sind in die Kavität 8 führende Luftkanäle 14 ausgebildet. In die Vertiefung 12 ist für die Durchführung eines Schaum-Spritzgießverfahrens ein Einlegeteil 16 eingelegt, das beim fertiggestellten Verbindungsteil das Verschlussteil bildet, das die Haft- und/oder Verhakungselemente aufweist.

Vor dem Einsetzen des vorgefertigten Einlegeteils 16 in die Spritzgießform 2 wird die von den Verhakungselementen 18 abgewandte Seite des Einlegeteils 16 mit einer Beschichtung versehen, die beim Hinterspritzvorgang als Reaktionsvermittler die Ausbildung einer stoffschlüssigen Verbindung zwischen dem Einlegeteil 16 und dem Schaumstoffteil begünstigt, das aus der über jeweilige Kanäle 16 zugeführten Polymerschmelze 22 gebildet wird. Als diesbezügliches Additiv ist, wie bereits oben angedeutet, vorzugsweise ein Polyurethan vorgesehen.

Wie Fig. 1 zeigt, ist das Einlegeteil 16 derart in die Vertiefung 12 eingesetzt, dass Verhakungselemente 18 in Form von Haken, die in Fig. 1 nicht maßstäblich, in übertriebener Höhe und lediglich schematisch vereinfacht angedeutet sind, am Grund der Vertiefung 12 anliegen. Um das Einlegeteil 16 vor Abschluss des Schaum-Spritzgießvorgangs am Grund der Vertiefung 12 zu halten, ist über die Luftkanäle 14 Saugluft anlegbar. Nicht maßstäbliche und in Fig. 1 ebenfalls mit übertriebener Höhe dargestellte Abstandhalter 20 bilden, vom Grund der Vertiefung 12 vorspringend, eine Abstützung beim Spritzgießvorgang. Gleichermaßen kann über die Luftkanäle 14 beim Gießvorgang Stützgas unter Druck für den Schutz der Verhakungselemente 18 zugeführt werden.

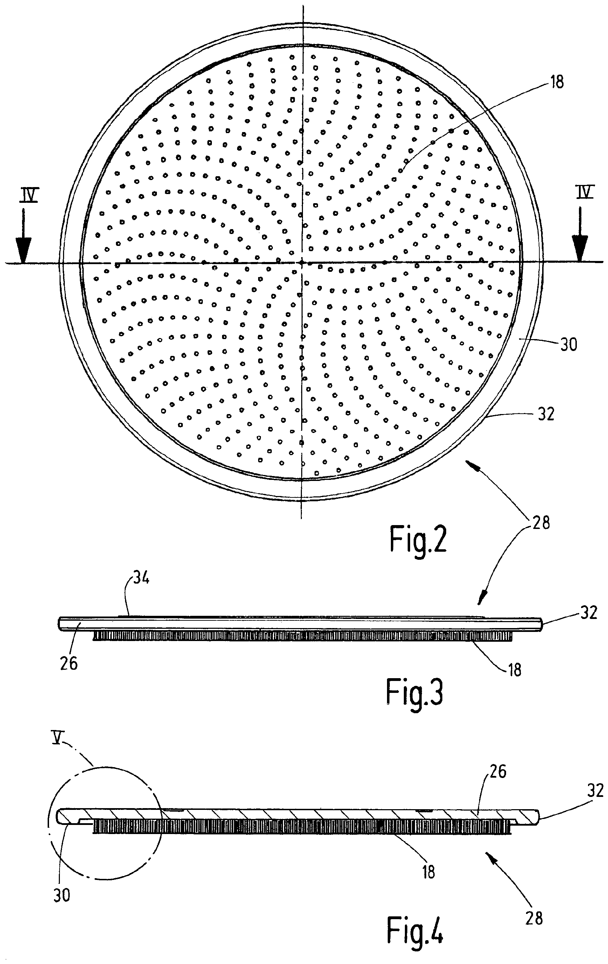

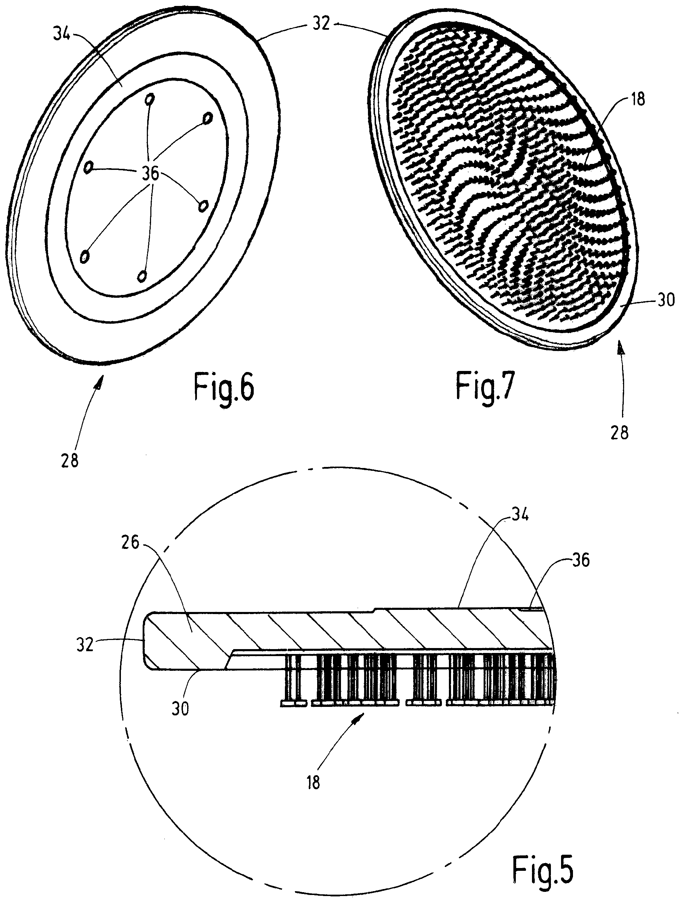

Die Fig. 1 zeigt den Zustand nach Einspritzen der Polymerschmelze 22, die durch ein Treibmittel aufgeschäumt ist, im vorliegenden Fall mittels eines Treibgases, vorzugsweise Kohlendioxydgas oder Stickstoffgas. Mittels der aufgeschäumten Polymerschmelze 22 wird das Einlegeteil 16 derart hinterspritzt, dass ein geschäumtes Trägerteil 26 gebildet wird, das sich mit dem Einlegeteil 16 stoffschlüssig verbindet, so dass ein Verbindungsteil 28 in Form eines einstückigen Bauteils gebildet wird, das aus dem Trägerteil 26 mit integriertem, aus den Verhakungselementen 18 bestehendem Verschlussteil besteht. Wie Fig. 1 zeigt, übergreift das Trägerteil 26 das Einlegeteil 16 mit einem seitlichen Überstand 30, s. auch Fig. 4 und 5. Nach Beendigung des im Schaum-Spritzgießverfahren durchgeführten Hinterspritzvorgangs und dem Öffnen der Formteile 4, 6 kann der Vorgang des Ausformens des Verbindungsteils 28 durch über die Luftkanäle 14 zugeführte Blasluft bewirkt oder unterstützt werden.

Die Fig. 2 bis 7 zeigen das nach dem Hinterspritzvorgang aus der Spritzgießform 2 entnommene Verbindungsteil 28, das die Form eines flachen, runden Tellers besitzt. Dieser besteht aus dem Trägerteil 26, das als Schaumstoffkörper aus der aufgeschäumten Polymerschmelze 22 gebildet ist und den damit einstückigen Verhakungselementen 18, die beispielsweise in Pilzform vorgesehen, jedoch in den Zeichnungen lediglich schematisch vereinfacht und nicht maßstäblich dargestellt sind.

Die Verhakungselemente 18 erstrecken sich als kreisrunder Flächenbereich bis zu dem sie umfassenden Überstand 30, der sich entlang des Außenumfangs 32 erstreckt. Die von den Verhakungselementen 18 abgewandte Rückseite des Verbindungsteils 28 ist, wie am deutlichsten aus der die Rückseite zeigenden Fig. 6 zu ersehen ist, nicht vollständig planar. Wie gezeigt, ist eine Ringrippe 34 gebildet, die konzentrisch in einem Abstand vom Außenumfang 32 verläuft und, wie der vergrößerten Darstellung von Fig. 5 zu entnehmen ist, einen sehr geringen Überstand, im Bereich eines Zehntel Millimeter oder weniger, bei ebenflächiger Außenseite aufweist.

Innerhalb der Ringrippe 34 sind als Oberflächenmarken 36 die Angussstellen an den Mündungen 38 der Heißkanäle 10 (Fig. 1) sichtbar. Die Oberflächenmarken 36 befinden sich, entsprechend der Anordnung der Heißkanäle 10, im Formteil 4 der Spritzgießform 2 auf einer Kreislinie, die in geringem Abstand innerhalb der Ringrippe 34 konzentrisch verläuft.

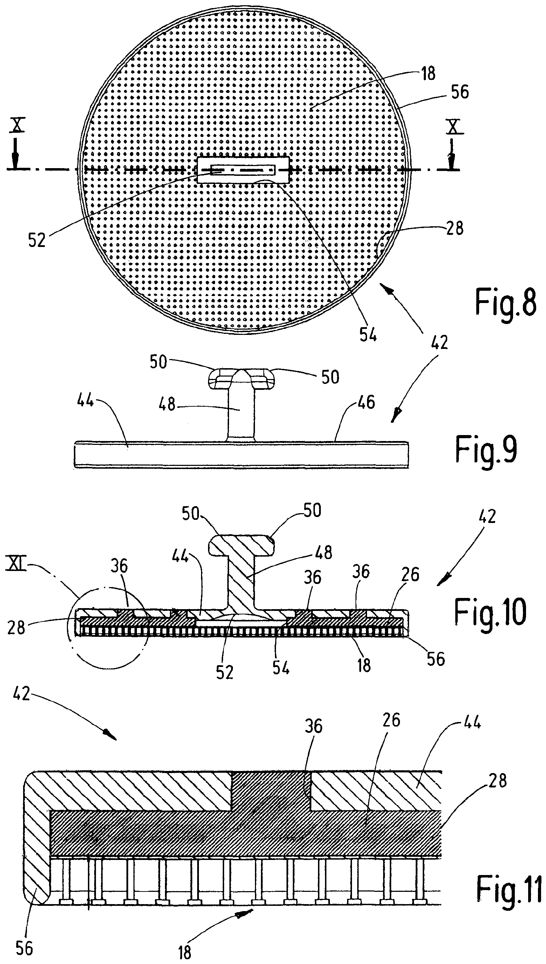

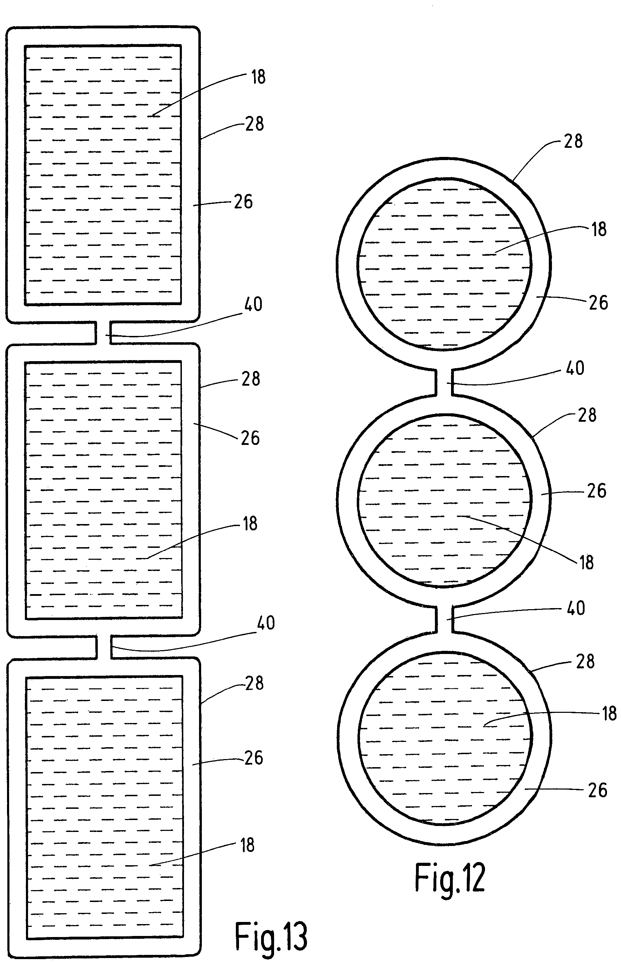

Wie Fig. 12 zeigt, können mittels einer mehrteiligen Spritzgießform, die nicht dargestellt ist, mehrere Verbindungsteile 28 hergestellt werden, die über Ansätze 40 ihrer Trägerteile 26 miteinander zusammenhängen und ein sog. "Coil" bilden. Für die Weiterverarbeitung zur Herstellung eines End-Bauteils, wie es in Fig. 8 bis 11 dargestellt und mit 42 bezeichnet ist, können die Verbindungsteile 28 an den Ansätzen 40 voneinander getrennt und für die Weiterverarbeitung rationell zur Verfügung gestellt werden. Die Fig.13 zeigt die Ausbildung eines entsprechenden Coils, wobei anstelle von Verbindungsteilen 28 mit kreisrundem Umriss Verbindungsteile 28 mit rechteckförmigem Umriss vorgesehen sind.

Das End-Bauteil 42, das das Verbindungsteil 28 als Komponente eines Verbindungssystems enthält, mit dem ein Gegenstand, wie eine Matte, an einer Bodenstruktur mittels einer Haftverschlussverbindung festlegbar ist, hat die Form eines runden Verbindungstellers, dessen Gestalt am deutlichsten aus Fig. 9 und 10 entnehmbar ist. Der Verbindungsteller weist einen Grundkörper 44 aus einem Kunststoffmaterial auf, das bei einem Spritzgussverfahren, beispielsweise einem weiteren Hinterspritzvorgang, eine gute Verbindung mit dem geschäumten Trägerteil 26 des Verbindungsteils 28 eingeht. Der tellerförmige Grundkörper 44 weist an der einer nicht gezeigten Tragstruktur zugewandten Unterseite 46 einen einstückig angeformten Verankerungszapfen 48 auf, an dessen freiem Ende zueinander diametrale Verankerungsknebel 50 seitlich vorstehen. An der Oberseite des Grundkörpers 44, an der sich das Verbindungsteil 28 befindet, ist in dem mit dem Zapfen 48 fluchtenden Zentralbereich eine vertiefte Mulde 52 ausgeformt. Diese erleichtert das Verdrehen des Grundkörpers 44, wenn dieser an einer Tragstruktur dadurch verankert wird, dass der Zapfen 48 durch eine Schlitzöffnung hindurchgesteckt und dann verdreht wird. In dem für die Verbindung mit dem Grundkörper 44 bereitgestellten Verbindungsteil 28 wird, wie die Fig. 8 und 10 zeigen, im Zentralbereich ein rechteckförmiger Ausschnitt 54 gebildet, der sich durchgehend durch die Verhakungselemente 18 und das Trägerteil 26 erstreckt, so dass die Mulde 52 im Grundkörper 44 zugänglich ist.

Bei dem Spritzgießverfahren, bei dem das Verbindungsteil 28 mit der Oberseite des Grundkörpers 44 verbunden wird, wird, wie Fig. 10 und Fig. 11 deutlicher zeigen, am Grundkörper 44 ein hochgezogener Außenrand 56 ausgebildet. Die Höhe des Außenrandes 56 kann größer gewählt sein als die Höhe der sich anschließenden Verhakungselemente 18 des Verbindungsteils 28. Hierdurch lassen sich die Elemente sowohl von oben her als auch von der Seite vor Beschädigungen schützen und sind von der Stirnseite des Grundkörpers 44 her gesehen für den Ein- oder Angriff eines korrespondierenden Verschlussmaterials, beispielsweise in Form von Schlaufenmaterial, vollständig zugänglich, das sich an dem jeweils anzubringenden Gegenstand befindet. Wenn es sich bei den Verhakungselementen 18 um "Gecko"-Elemente zur Bildung einer Adhäsionsverbindung handelt, dann ist der Außenrand 56, wie es in Fig. 11 gezeigt ist, nicht über die Verhakungselemente 18 vorstehend oder allenfalls geringfügig vorstehend ausgebildet.

Das aufgeschäumte Kunststoffmaterial hat eine Erweichungs- und Schmelztemperatur vergleichbar dem Kunststoffmaterial des Verschlussteiles. Dergestalt bilden die Kunststoffmaterialien des Verschlussteiles mit dem aufgeschäumten Kunststoffmaterial innerhalb der Form eine gemeinsame Schmelze aus, nach deren Erkalten das Verschlussteil mit dem Schaum stoffschlüssig verbunden ist. Dabei liegen die Schmelztemperaturbereiche von Polyethylen bei ca. 110 bis 135 °C, die von Polypropylen bei 160 bis 170 °C und mögliche Polyamidmaterialien schmelzen in einem Temperaturbereich zwischen 170 und 260 °C. Polyethylenterephtalat wiederum hat einen sehr hohen Schmelzpunkt von 250 bis 260 °C. Durch Wahl der idealen Materialpaarungen mit ihren Schmelztemperaturen lässt sich die nach dem Erkalten stoffschlüssige Verbindung über ein gemeinsames Schmelzbad herstellen.

## Patentansprüche

1. Verfahren zum Herstellen eines Verbindungsteils (28) unter Einsatz eines Schaum-Spritzgießverfahrens, wobei in einem ersten Schritt ein eine Komponente eines Haftverschlusses bildendes Verschlussteil mit Haft- und/oder Verhakungselementen (18) hergestellt und als Einlegeteil (16) in eine Spritzgießform (2) eingebracht wird, in der in einem zweiten Schritt mittels eines aufgeschäumten Kunststoffmaterials (22) ein Trägerteil (26) gebildet wird, das sich mit dem Einlegeteil unter Bildung des Verbindungsteils (28) verbindet, **dadurch gekennzeichnet, dass** die Spritzgießform (2) bewegliche Formteile (4, 6) aufweist, die eine Formkavität (8) begrenzen, dass in dem Formteil (6), das dem einen Kanal (10) aufweisenden Formteil (4) gegenüberliegt und in dem eine die Kavität (8) bildende Vertiefung (12) ausgebildet ist, in die Kavität (8) führende Luftkanäle (14) ausgebildet sind, und dass über die Luftkanäle (14) Saugluft angelegt wird oder beim Gießvorgang Stützgas unter Druck für den Schutz der Verhakungselemente (18) zugeführt wird.

2. Verfahren nach Anspruch 1, **dadurch gekennzeichnet, dass** das geschäumte Trägerteil (26) als Dämpfungsschicht konzipiert wird, um dergestalt höhere Spritzgussdrücke zu ermöglichen, ohne dass es zu Beschädigungen an den Haft- und/oder Verhakungselementen (18) des Einlegeteils (16) kommt.

3. Verfahren nach Anspruch 1 oder 2, **dadurch gekennzeichnet, dass** für das Schaum-Spritzgussverfahren mindestens ein Treibmittel auf physikalische Weise dem Kunststoffmaterial (22) zugemischt wird, vorzugsweise wird Kohlendioxyd (CO₂)- oder Stickstoff (N₂)-Gas als Treibmittel einer Polymerschmelze, vorzugsweise aus Polyamid (PA), Polypropylen (PP), Polyethylen (PE) oder Acrylnitrilbutadienstyrol (ABS) bestehend, zugemischt.

4. Verfahren nach einem der vorstehenden Ansprüche, **dadurch gekennzeichnet, dass** zwischen dem Einlegeteil (16), auch als Bestandteil desselben, und dem geschäumten Trägerteil (26) eine Beschichtung eingesetzt wird, vorzugsweise das Einlegeteil (16) auf seiner dem Trägerteil (26) zugewandten Seite mit einem Reaktionsvermittler versehen wird, der besonders bevorzugt Polyurethan aufweist.

5. Verfahren nach einem der vorstehenden Ansprüche, **dadurch gekennzeichnet, dass** das derart hergestellte Verbindungsteil (28) eine Art Halbzeug bildet, das vorzugsweise im Rahmen weiterer Spritzgussverfahren unter Bildung eines End-Bauteils (42) mit weiteren Kunststoffmaterialien verbunden wird, die eine gute Verbindung mit dem geschäumten Trägerteil (26) des Verbindungsteils (28) eingehen.

6. Verfahren nach einem der vorstehenden Ansprüche, **dadurch gekennzeichnet, dass** das jeweilige Verbindungsteil (28) von mehreren, in der Art eines Coils zusammenhängenden Verbindungsteilen (28) für seine weitere Weiterverarbeitung abgetrennt wird.

7. Verfahren nach einem der vorstehenden Ansprüche, **dadurch gekennzeichnet, dass** das jeweilige Trägerteil (26) mit einem vorgebbaren Überstand (30) unter Bildung einer Abdichtung das Einlegeteil (16) seitlich übergreift.

8. Verfahren nach einem der vorstehenden Ansprüche, **dadurch gekennzeichnet, dass** das jeweilige Verbindungsteil (28) tellerförmig ausgebildet wird.

9. Verfahren nach einem der vorstehenden Ansprüche, **dadurch gekennzeichnet, dass** die jeweiligen Elemente (18) des Einlegeteils (16) gegossen, gewebt, gewirkt, gestrickt oder geraschelt werden und dass die Elemente (18) haken-, pilz- oder schlaufenförmig ausgebildet werden.

## Claims

1. Method for manufacturing a connecting element (28) using a foam injection moulding method, wherein a fastening part with gripping and/or interlocking elements (18) forming a component of a hook and loop fastener is manufactured in a first step and placed in an injection mould (2) as an insert (16), a supporting element (26) being formed in said injection mould by means of a foamed plastics material (22) in a second step, said supporting element (26) being connected to the insert to form the connecting element (28), **characterised in that** the injection mould (2) comprises movable mould sections (4, 6), which delimit a mould cavity (8), **in that** air channels (14) leading into the cavity (8) are formed in the mould section (6) that is opposite the mould section (4) comprising a channel (10) and in which a depression (12) forming the cavity (8) is formed, and **in that** suction air is applied via the air channels (14) or support gas is supplied under pressure during the moulding process to protect the interlocking elements (18).

2. Method according to claim 1, **characterised in that** the foamed supporting element (26) is designed as a damping layer to permit higher injection moulding pressures in such a way as to avoid damaging the gripping and/or interlocking elements (18) of the insert (16).

3. Method according to either claim 1 or claim 2, **characterised in that**, for the foam injection moulding method, at least one blowing agent is physically added to the plastics material (22), preferably carbon dioxide (CO₂) or nitrogen (N₂) gas being added as a blowing agent to a polymer melt, preferably comprising polyamide (PA), polypropylene (PP), polyethylene (PE) or acrylonitrile butadiene styrene (ABS).

4. Method according to any one of the preceding claims, **characterised in that** a coating is inserted between the insert (16), also as part of said insert, and the foamed supporting element (26), the insert (16) preferably being provided with a reaction agent on its side facing the supporting element (26), said reaction agent most preferably comprising polyurethane.

5. Method according to any one of the preceding claims, **characterised in that** the connecting element (28) manufactured in this way forms a kind of semi-finished product, which is preferably connected to other plastics materials which form a good connection with the foamed supporting element (26) of the connecting element (28) as part of subsequent injection moulding methods to form an end component (42).

6. Method according to any one of the preceding claims, **characterised in that** the respective connecting element (28) is separated from a plurality of connecting elements (28) attached in the form of a coil for further processing of said connecting element.

7. Method according to any one of the preceding claims, **characterised in that** the respective supporting element (26) protrudes over the side of the insert (16) with a pre-definable projection (30) to form a seal.

8. Method according to any one of the preceding claims, **characterised in that** the respective connecting element (28) is disc-shaped.

9. Method according to any one of the preceding claims, **characterised in that** the respective elements (18) of the insert (16) are moulded, woven, knitted or Raschel-knitted and **in that** the elements (18) are shaped like hooks, mushrooms or loops.

## Revendications

1. Procédé de fabrication d'une partie (28) de liaison, en utilisant un procédé de moulage par injection de mousse, dans lequel, dans un premier stade, on fabrique une partie de fermeture formant un composant d'une fermeture autoagrippante et ayant des éléments (18) d'agrippage et/ou d'accrochage, et on l'introduit comme prisonnier (16) dans un moule (2) de moulage par injection, dans lequel, dans un deuxième stade, on forme, au moyen d'une matière (22) plastique moussée, une partie (26) de support, qui se lie au prisonnier en formant la partie (28) de liaison, **caractérisé en ce que** le moule 1(2) de moulage par injection a des parties (4, 6) de moule, qui délimitent une empreinte (8) de moule, **en ce que**, dans la partie (6) du moule, qui est opposée à une partie (4) de moule ayant un canal (10), et dans laquelle est formée une cavité (12) formant l'empreinte (8), sont constitués des canaux (14) pour de l'air menant à l'empreinte (8) et **en ce que** l'on applique de l'air d'aspiration par les canaux (14) pour de l'air ou, lors de l'opération de coulée, on envoie du gaz d'appui sous pression pour protéger les éléments (18) d'accrochage.

2. Procédé suivant la revendication 1, **caractérisé en ce que** l'on conçoit la partie (26) support moussée sous la forme d'une couche d'amortissement pour permettre ainsi d'avoir des pressions de moulage par injection plus hautes, sans qu'il s'ensuive des endommagements des éléments (18) d'agrippage et/ou d'accrochage du prisonnier (16).

3. Procédé suivant la revendication 1 ou 2, **caractérisé en ce que**, pour le procédé de moulage par injection de mousse, on mélange, à la matière (22) plastique, un agent porogène à effet physique, de préférence on ajoute du dioxyde de carbone (CO₂) gazeux ou de l'azote (N₂) gazeux, comme agent porogène, à du polymère fondu, de préférence du polyamide (PA), du polypropylène (PP), du polyéthylène (PE) ou de l'acrylonitrile butadiène styrène (ABS).

4. Procédé suivant l'une des revendications précédentes, **caractérisé en ce que**, entre le prisonnier (16), également comme partie constitutive de celui-ci, et la partie (26) de support moussée, on insère un revêtement, de préférence le prisonnier étant pourvu, sur son côté tourné vers la partie (26) de support, d'un intermédiaire de réaction, qui a, d'une manière particulièrement préférée, du polyuréthane.

5. Procédé suivant l'une des revendications précédentes, **caractérisé en ce que** la partie (28) de liaison ainsi fabriquée forme une sorte de demi-produit, qui est relié, de préférence dans le cadre d'autres procédés de moulage par injection, avec formation d'une pièce (42) finale, à d'autres matières plastiques, qui entrent en une bonne liaison avec la partie (26) de support moussée de la partie (28) de liaison.

6. Procédé suivant l'une des revendications précédentes, **caractérisé en ce que** l'on sépare, pour son traitement ultérieur, la partie (28) de liaison respective de plusieurs parties (28) de liaison liées ensemble à la manière d'un coil.

7. Procédé suivant l'une des revendications précédentes, **caractérisé en ce que** la partie (26) de support respective dépasse latéralement du prisonnier (16) d'un dépassement (30) pouvant être donné à l'avance avec formation d'une étanchéité.

8. Procédé suivant l'une des revendications précédentes, **caractérisé en ce que** l'on constitue la partie (28) de liaison respective en forme de disque.

9. Procédé suivant l'une des revendications précédentes, **caractérisé en ce que** l'on coule, tisse, tricote, fabrique en bonneterie ou fabrique au métier Rachel le prisonnier (16) et **en ce que** l'on constitue les éléments (18) sous forme de crochets, de champignons ou de boucles.
